# FASCICULE DE BREVET EUROPEEN

(11) **EP 1 317 746 B1**
(45) Date de publication et mention de la délivrance du brevet: **08.02.2006**
(21) Numéro de dépôt: 01954067.3
(22) Date de dépôt: 10.07.2001
(51) Int. Cl.: G09F 9/35, B60Q 3/04

(54) **DISPOSITIF DE VISUALISATION A CELLULE D'AFFICHAGE**
ANZEIGEVORRICHTUNG MIT DISPLAY
VISUAL DISPLAY DEVICE WITH DISPLAY CELL

(30) Priorité: 21.07.2000 FR 0009633
(43) Date de publication de la demande: 11.06.2003
(73) Titulaire: Thales, 75008 Paris (FR)
(72) Inventeur: LABROUSSE, Gilles, Thales Intellectuel Property, F-94117 Arcueil Cedex (FR); CAPDEPUY, Pascal, Thales Intellectual Property, F-94117 Arcueil Cedex (FR)
(74) Mandataire: Esselin, Sophie
(86) Numéro de dépôt international: PCT/FR2001/002226
(87) Numéro de publication internationale: WO 2002/009074

(56) Documents cités:
- DE-A- 4 013 890
- FR-A- 2 674 295
- US-A- 4 756 105

## Description

L'invention concerne le domaine des dispositifs de visualisation comportant une ou plusieurs cellules d'affichage. La cellule d'affichage est de préférence sensiblement plate. La cellule d'affichage est avantageusement un écran à cristaux liquides. Le dispositif de visualisation comporte également un cadre destiné à recevoir la cellule d'affichage et un système de maintien mécanique de la cellule d'affichage par rapport au cadre.

Selon un premier art antérieur, il est connu de pincer la cellule d'affichage entre deux parties du cadre afin de maintenir la cellule d'affichage. De chaque côté de la cellule d'affichage, entre la cellule d'affichage et la partie du cadre destinée à pincer la cellule d'affichage, se trouve un joint. La cellule d'affichage est donc pincée par les parties du cadre par l'intermédiaire de joints.

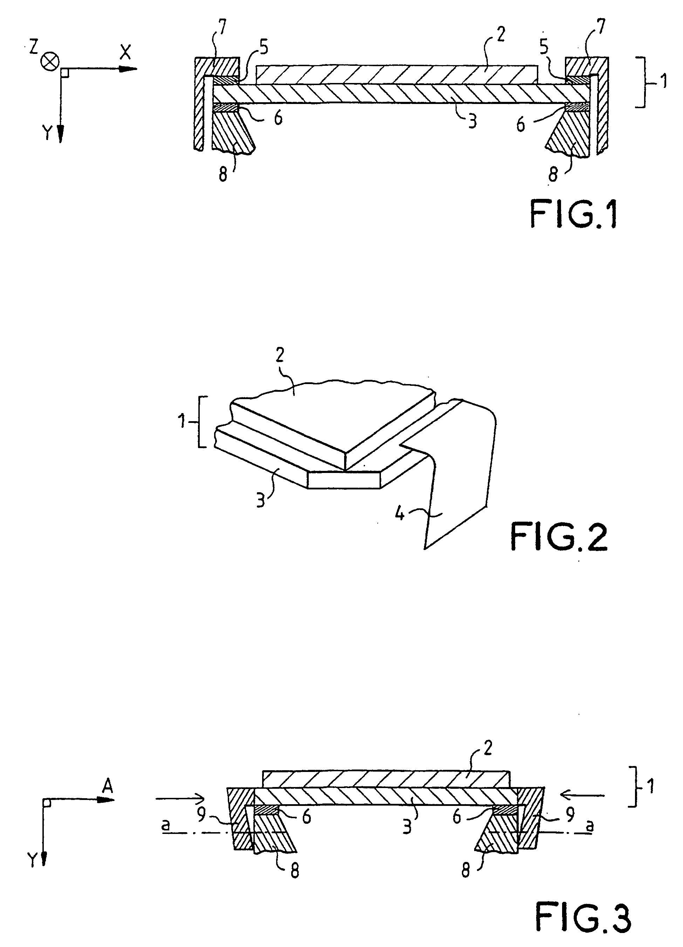

La figure 1 représente schématiquement une vue en coupe d'une partie d'un dispositif selon le premier art antérieur. La cellule d'affichage 1 est un écran à cristaux liquides comprenant deux plaques de verre, respectivement une plaque supérieure 2 et une plaque inférieure 3. La plaque inférieure 3 est généralement appelée TFT tandis que la plaque supérieure 2 est généralement appelée contre-électrode. Les cristaux liquides sont disposés entre les plaques inférieure 3 et supérieure 2. L'écran 1 est représenté en coupe de profil. Le cadre comporte deux parties, une partie supérieure 7 et une partie inférieure 8. La plaque inférieure 3 de l'écran 1 est pincée entre les parties supérieure 7 et inférieure 8 du cadre par l'intermédiaire de joints. Le joint supérieur 5 est pincé entre la partie supérieure 7 du cadre et la plaque inférieure 3 de l'écran 1 tandis que le joint inférieur 6 est pincé entre la plaque inférieure 3 de l'écran 1 et la partie inférieure 8 du cadre. Le plan moyen de l'écran 1 qui est sensiblement plat est le plan XZ. La direction de l'effort de pincement est la direction Y. Les joints de nature élastique permettent de rattraper les dispersions de côtes entre les parties 7 et 8 du cadre qui assurent par pincement l'encapsulation de l'écran 1.

La cellule d'affichage, notamment au niveau des connexions électriques la rattachant au reste du dispositif, est fragile. Il est intéressant, pour protéger la cellule d'affichage lorsque le dispositif de visualisation est soumis à des contraintes telles que des vibrations par exemple, de limiter les possibilités de mouvement de la cellule d'affichage, en particulier dans un plan parallèle à un plan moyen de la cellule d'affichage, ou au plan moyen de la cellule d'affichage lorsque celle-ci est sensiblement plate. Ainsi, la détérioration voire la destruction des connexions électriques pourra être évitée, même lorsque le dispositif de visualisation sera soumis à des contraintes opérationnelles sévères telles que des vibrations très élevées dans le cas préférentiel d'écrans à cristaux liquides pour dispositif de visualisation utilisés par exemple dans des consoles d'aéronef, notamment d'aéronef militaire.

La figure 2 représente schématiquement en perspective un tel type de connexion électrique dans le cas préférentiel où la cellule d'affichage est un écran à cristaux liquides, mettant ainsi en évidence le problème posé par un dispositif de visualisation selon le premier art antérieur. L'écran 1 comprend une plaque supérieure 2 et une plaque inférieure 3. Une connexion électrique 4, appelée tab, relie électriquement la plaque inférieure 3 au reste du dispositif de visualisation. Le tab est constitué d'un flex sur lequel a été déposée une puce électronique. Lors de déplacements trop importants ou trop violents dans le plan moyen de l'écran 1, lorsque le dispositif de visualisation est soumis à des contraintes élevées comme par exemple de fortes vibrations, le tab 4 risque de se déchirer, ce qui détériorera et même détruira la connexion électrique entre l'écran 1 et le reste du dispositif de visualisation.

Selon un deuxième art antérieur, il est connu d'utiliser des brides angulaires avec vis de serrage associées. Quatre brides angulaires sont respectivement disposées au niveau des quatre coins d'une cellule d'affichage. Les brides viennent enserrer la cellule d'affichage et sont immobilisées par des vis de serrage. Un premier inconvénient réside dans le fait que la position de la cellule d'affichage par rapport au cadre est indéterminée, c'est-à-dire que cette position dépend de la répartition des efforts de serrage au niveau des quatre coins, ce qui est gênant notamment lorsqu'un clavier tactile est associé à la cellule d'affichage car les touches de sélection et l'image affichée sur la cellule d'affichage peuvent être désaxées les unes par rapport aux autres. Un deuxième inconvénient réside dans le fait que des défauts peuvent être introduits dans l'image affichée par la cellule d'affichage, ces défauts provenant des contraintes exercées par les vis de serrage dont les axes de serrage sont respectivement parallèles aux axes de bridage de la cellule d'affichage par les brides auxquelles ces vis de serrage sont associées. Ces défauts sont par exemple des moirures visibles sur la cellule d'affichage.

La figure 3 représente schématiquement une vue en coupe d'une partie d'un dispositif de visualisation selon le deuxième art antérieur. La cellule d'affichage 1 est un écran à cristaux liquides qui comprend une plaque supérieure 2 et une plaque inférieure 3. La plaque inférieure 3 repose sur une parties inférieure 8 de cadre par l'intermédiaire d'un joint inférieur 6. L'écran 1 est représenté en coupe diagonale, l'axe A étant parallèle à la diagonale de coupe. Des brides 9 viennent brider l'écran 1 en exerçant une pression selon des axes de bridage parallèles à l'axe A de la diagonale de l'écran 1 et représentés par des flèches sur la figure 3. Les axes a de serrage des vis de serrage non représentées sur la figure 3 pour des raisons de simplicité sont parallèles à l'axe A et donc aux axes de bridage. Les axes a de serrage sont représentés en traits mixtes.

Le document DE-A- 4 013 830 décrit un afficheur à critaux liquides plaqué dans son support par un système de maintien mécanique comportant des pinces à ressort.

L'invention propose une solution dans laquelle les déplacements possibles de la cellule d'affichage dans un plan moyen de la cellule d'affichage ou dans le plan moyen de la cellule d'affichage lorsque celle-ci est sensiblement plate, c'est-à-dire selon des directions parallèles au plan moyen de la cellule d'affichage, sont limités par rapport aux déplacements possibles dans les dispositifs de visualisation selon le premier art antérieur précité, déplacements qui se réalisent lorsque la cellule d'affichage est par exemple soumise à des vibrations. L'invention propose également une solution dans laquelle la position de la cellule d'affichage par rapport au cadre et donc par rapport au reste du dispositif de visualisation est mieux déterminée que dans le cas du deuxième art antérieur précité. L'invention propose encore une solution dans laquelle les contraintes exercées sur la cellule d'affichage dans le plan moyen de la cellule d'affichage sont réduites par rapport aux contraintes exercées dans le dispositif de visualisation selon le deuxième art antérieur précité.

Selon l'invention, il est prévu un dispositif de visualisation comportant au moins, une cellule d'affichage, un cadre destiné à recevoir la cellule, un système de maintien mécanique de la cellule par rapport au cadre, caractérisé en ce que le système de maintien mécanique comporte plusieurs butées disposées de manière à déterminer sans la maintenir une position unique de la cellule par rapport au cadre dans un plan moyen de la cellule et au moins un coulisseau disposé de manière à pouvoir, en coopérant avec les butées, maintenir ladite position.

Le dispositif de visualisation comporte une ou plusieurs cellules d'affichage maintenue par un système de maintien mécanique objet de l'invention. Chaque cellule d'affichage est maintenue par un système de maintien mécanique objet de l'invention dans un plan moyen de la cellule d'affichage ; le système de maintien mécanique de la cellule d'affichage permet donc le maintien dans deux directions de l'espace, le maintien dans la troisième direction de l'espace étant assurée par des moyens qui ne sont pas l'objet de l'invention.

La cellule d'affichage est de préférence sensiblement plate, c'est-à-dire que l'une de ses trois dimensions qui sera appelée l'épaisseur est substantiellement inférieure aux deux autres dimensions, c'est-à-dire que l'épaisseur est inférieure à la moitié de chacune des deux autres dimensions constituant alors ensemble le plan moyen de la cellule, dans lequel plan moyen les déplacements possibles doivent être limités. Bien que ce ne soit pas l'objet de l'invention, la cellule est également maintenue selon une direction orthogonale au plan moyen de la cellule, c'est-à-dire suivant la direction de son épaisseur. Or, en particulier pour une cellule sensiblement plate, le maintien de la cellule selon la direction orthogonale au plan moyen de la cellule est, soit insuffisant pour immobiliser la cellule de manière à ce que les connexions électriques de la cellule ne se détériorent pas en cas de vibrations par exemple, soit trop important pour que la contrainte exercée ne détériore pas la cellule ou ne perturbe pas l'image affichée par la cellule. A titre d'exemple, un écran à cristaux liquides est sensiblement plat tandis qu'un écran à tube cathodique classique n'est pas sensiblement plat.

Un cadre est destiné à recevoir la cellule. La cellule est maintenue par rapport à ce cadre, par un système de maintien mécanique objet de l'invention, selon les directions parallèles à un plan moyen de la cellule ou au plan moyen de la cellule lorsque celle-ci est sensiblement plate. Dans toute la suite du texte, pour des raisons de simplicité et saut mention contraire, on parlera indifféremment d'un ou du plan moyen de la cellule d'affichage que celle-ci soit sensiblement plate ou non. Ce système de maintien mécanique comporte un ensemble de butées disposées de manière à déterminer une position unique de la cellule par rapport au cadre dans le plan moyen de la cellule. Les butées appartiennent, soit au cadre, soit à la cellule, soit encore pour partie d'entre elles au cadre et pour partie d'entre elles à la cellule.

Les butées appartiennent préférentiellement au cadre. Une seule position de la cellule permet alors à la cellule d'être en contact avec toutes les butées. Ce contact peut soit se faire directement, soit se faire indirectement comme par exemple par l'intermédiaire de protections de butée disposées entre les butées et la cellule. La position de la cellule, lorsque la cellule est en contact avec toutes les butées, est déterminée mais non maintenue, c'est-à-dire que la cellule n'est pas bloquée dans cette position. Un ou plusieurs coulisseaux viennent au contact de la cellule afin de bloquer la position de la cellule préalablement déterminée par les butées. C'est la coopération du ou des coulisseaux avec les butées qui permet de maintenir par blocage la position préalablement déterminée par les butées. La position unique préalablement déterminée par les butées ne dépend pas de la répartition des serrages puisqu'elle est déterminée avant le serrage du ou des coulisseaux.

L'invention sera mieux comprise et d'autres particularités et avantages apparaîtront à l'aide de la description ci-après et des dessins joints, donnés à titre d'exemples, où :
- la figure 1 représente schématiquement une vue en coupe d'une partie d'un dispositif de visualisation selon le premier art antérieur ;
- la figure 2 représente schématiquement une vue en perspective mettant en évidence le problème posé par un dispositif de visualisation selon le premier art antérieur ;
- la figure 3 représente schématiquement une vue en coupe d'une partie d'un dispositif de visualisation selon le deuxième art antérieur ;
- la figure 4A représente schématiquement une vue de dessus d'un premier mode de disposition préférentiel des butées et des coulisseaux autour de la cellule d'affichage dans un dispositif de visualisation selon l'invention ;
- les figures 4B à 4E représentent schématiquement respectivement une vue de dessus d'autres modes de disposition des butées et des coulisseaux autour de la cellule d'affichage dans un dispositif de visualisation selon l'invention ;
- la figure 5 représente schématiquement une vue éclatée d'un mode de réalisation préférentiel d'une partie d'un dispositif de visualisation selon l'invention.

Afin de conférer une stabilité optimale à la position déterminée par les butées, les butées sont préférentiellement au nombre de trois et les projections des butées dans le plan moyen de la cellule ne sont de préférence pas alignées. Dans le plan moyen de la cellule d'affichage, la cellule d'affichage a deux degrés de liberté en translation et un degré de liberté en rotation. Ainsi, dans le plan moyen de la cellule d'affichage, deux des butées servent à supprimer l'un des degrés de libertés en translation et le degré de liberté en rotation, tandis que la troisième butée non alignée avec les deux autres sert à supprimer l'autre degré de liberté en translation. Afin de simplifier la conception et l'implémentation des butées, les butées appartiennent avantageusement toutes au cadre. Les butées se présentent par exemple sous la forme de bossages réalisés dans le cadre préférentiellement métallique.

A chaque butée est préférentiellement associée une protection de butée en matériau semi-rigide. En effet, dans le cas préférentiel d'un dispositif de visualisation comprenant un ou plusieurs écrans à cristaux liquides, le cadre est par exemple métallique tandis que l'écran est généralement en verre. Or, en mode opérationnel, c'est-à-dire lorsque le dispositif de visualisation va être soumis à des vibrations, ce contact direct entre le verre de l'écran et le métal du cadre risque de casser le verre de l'écran, en particulier si le niveau de vibrations est élevé. Les protections de butée en matériau semi-rigide réduisent ce risque de casse. Un matériau semi-rigide est un matériau pas trop rigide pour ne pas risquer de casser le verre de l'écran et pas trop mou pour éviter que les déplacements de la cellule dans son plan moyen ainsi autorisés ne cassent les connexions électriques de la cellule au reste du dispositif de visualisation. Le matériau semi-rigide est avantageusement du plastique, par exemple du type "Melinex" (marque déposée).

Afin de diminuer les contraintes exercées sur la cellule d'affichage, en particulier lorsque celle-ci est sensiblement plate car elle risquerait de se bomber, l'axe de serrage de chaque coulisseau n'est de préférence pas parallèle à l'axe de bridage de la cellule par ledit coulisseau. Ainsi, la position déterminée par les butées peut être maintenue par le ou les coulisseaux sans que ceux-ci n'exercent de contraintes trop importantes sur la cellule risquant de détériorer la cellule ou de perturber l'image affichée par la cellule. Notamment dans le cas d'un écran à cristaux liquides qui est particulièrement fragile mais non exclusivement, afin de supprimer complètement ou presque les contraintes exercées par le ou les coulisseaux sur la cellule d'affichage, l'axe de serrage du coulisseau est avantageusement sensiblement orthogonal à l'axe de bridage de la cellule par ledit coulisseau. Les contraintes peuvent être complètement supprimées lorsque l'axe de serrage est exactement orthogonal à l'axe de bridage et les contraintes ne sont que presque complètement supprimées lorsque l'axe de serrage n'est pas tout à fait orthogonal à l'axe de bridage. Dans le cas préférentiel d'un écran à cristaux liquides en particulier, afin d'éviter des risques de cassure au niveau d'un contact verre-métal entre le verre de l'écran et le métal du cadre, le matériau du coulisseau est avantageusement du plastique, par exemple du polyamide.

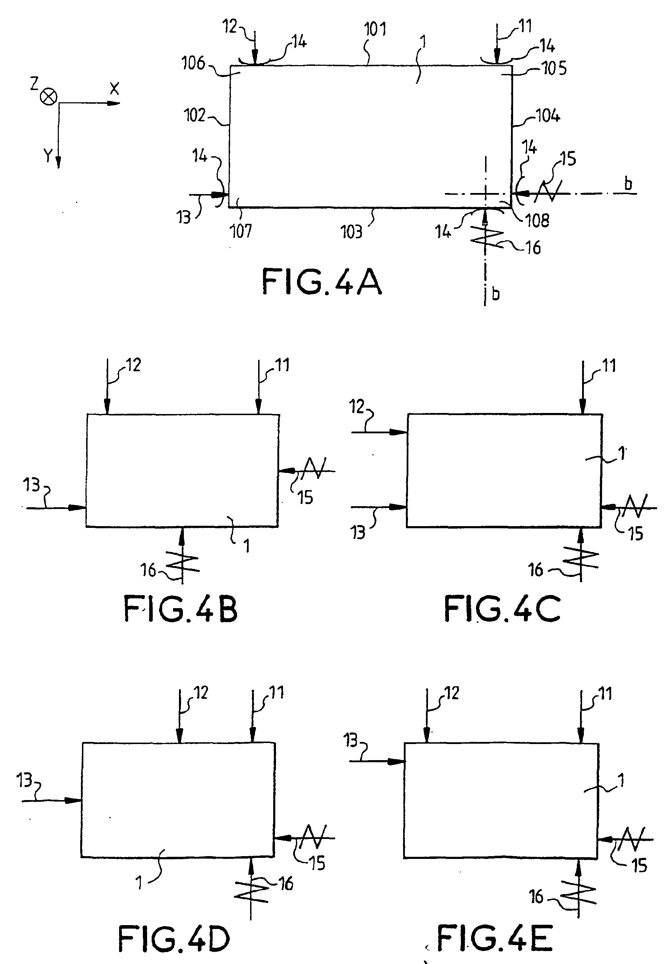

La figure 4A représente schématiquement une vue de dessus d'un premier mode de disposition préférentiel des butées et des coulisseaux autour de la cellule d'affichage dans un dispositif de visualisation selon l'invention. Une cellule d'affichage 1 de plan moyen XY est dans une position unique dans le plan moyen XY, position qui est déterminée par les butées 11, 12 et 13. Les butées 11, 12 et 13 ne suppriment pas le degré de liberté en translation de la cellule 1 selon l'axe Z, ce degré de liberté selon l'axe Z étant supprimé par d'autres moyens qui ne sont pas l'objet de l'invention. Lorsque la cellule 1 est au contact des butées 11 et 12, le seul degré de liberté restant dans le plan moyen XY est la translation selon l'axe X, lequel degré de liberté est supprimé lorsque la cellule 1, tout en restant au contact des butées 11 et 12, vient au contact de la butée 13. Entre la cellule 1 et chaque butée 11, 12 ou 13, est disposée une protection 14 de butée. Deux coulisseaux 15 et 16 viennent maintenir cette position déterminée par les butées 11, 12 et 13, chacun des coulisseaux 15 et 16 bloquant le déplacement de la cellule 1 dans l'une des directions du plan XY, respectivement dans les directions X et Y. La forme de la cellule 1 est rectangulaire, de grands côtés 101 et 103 et de petits côtés 102 et 104. Chacune des butées 11, 12 et 13 est située au niveau d'un des angles du rectangle, respectivement au niveau des angles 105, 106 et 107. Les deux coulisseaux 15 et 16 sont situés au niveau du quatrième angle 108 du rectangle et sont au contact respectivement des troisième 103 et quatrième 104 côtés du rectangle. Les deux coulisseaux 15 et 16 peuvent être remplacés par un coulisseau unique ayant une extrémité en forme d'angle rentrant ou par un coulisseau unique à extrémité plate si le quatrième angle 108 du rectangle est biseauté. Les axes b de bridage de la cellule 1 par les coulisseaux 15 et 16 sont représentés en traits mixtes. Les butées 11, 12 et 13, comme les coulisseaux 15 et 16 peuvent comporter des protections 14 de butée. Les butées sont représentées par des flèches, les pointes des flèches symbolisant les positions des butées. Les coulisseaux sont représentés par des flèches avec une ligne brisée dessus, la pointe des flèches symbolisant l'endroit de contact entre coulisseaux et cellule d'affichage.

Les figures 4B à 4E représentent schématiquement respectivement une vue de dessus d'autres modes de disposition des butées et des coulisseaux autour de la cellule d'affichage dans un dispositif de visualisation selon l'invention. Les références des butées 11, 12 et 13 et des coulisseaux 15 et 16 sont les mêmes que sur la figure 4A. La disposition de la figure 4B est aussi stable que celle de la figure 4A, mais est plus encombrante. La disposition de la figure 4C est moins stable que les dispositions des figures 4A et 4B mais est plus stable que les dispositions des figures 4D et 4E. La disposition de la figure 4D est moins stable que les dispositions des figures 4A, 4B et 4C mais est plus stable que la disposition de la figure 4E. La disposition de la figure 4E est moins stable que toutes les autres dispositions des figures 4A à 4D.

De manière plus générale et indépendamment de l'exemple préférentiel représenté au niveau de la figure 4A, dans le cas préférentiel où la forme de la cellule 1 est rectangulaire dans son plan moyen XY, il y a trois butées 11, 12 et 13. Deux butées 11 et 12 sont en contact avec un premier côté 101 du rectangle, de préférence le grand côté, les deux butées 11 et 12 étant respectivement situées au voisinage de deux angles 105 et 106 du rectangle. La troisième butée 13 est en contact avec un deuxième côté 102 du rectangle non parallèle au premier côté 101, le deuxième côté 102 étant de préférence le petit côté du rectangle, la troisième butée 13 étant située au voisinage d'un troisième angle 107 du rectangle. Une butée est située au voisinage d'un angle signifie que plus cette butée est proche de l'angle et plus la position est stable, aux problèmes pratiques de réalisation près. Typiquement, lorsque la butée est située dans le voisinage d'un angle, la butée est plus proche de l'angle que du milieu d'un côté du rectangle.

Dans une réalisation préférentielle, il y a au moins deux coulisseaux 15 et 16 qui sont respectivement au contact des troisième 103 et quatrième 104 côtés du rectangle, les deux coulisseaux 15 et 16 étant situés au voisinage du quatrième angle 108 du rectangle. Dans une autre réalisation, il y a un seul coulisseau situé au voisinage du quatrième angle 108 du rectangle. Lorsque le quatrième angle 108 est biseauté, le coulisseau s'appuie alors sur la partie biseautée du quatrième angle 108. Lorsque le quatrième angle 108 n'est pas biseauté, le coulisseau, en forme d'angle rentrant, s'appuie alors à la fois sur les troisième 103 et quatrième 104 côtés du rectangle.

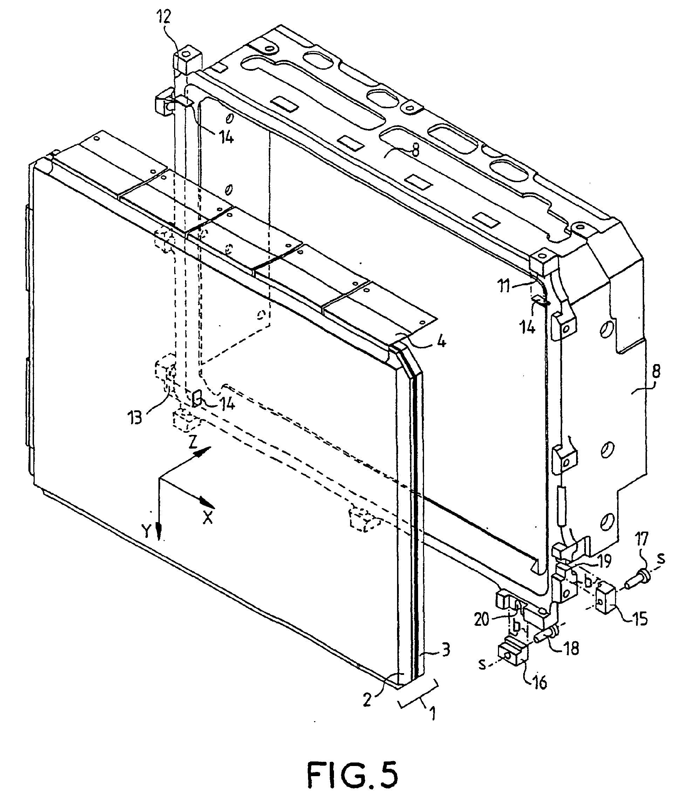

La figure 5 représente schématiquement une vue éclatée d'un mode de réalisation préférentiel d'une partie d'un dispositif de visualisation selon l'invention. La cellule d'affichage 1 est un écran à cristaux liquides comprenant : une plaque supérieure 2 et une plaque inférieure 3. Les connexions 4 électriques sont des tabs. La seule partie du cadre qui est représentée est la partie inférieure 8 du cadre sur laquelle vient reposer l'écran 1. La position de l'écran 1 est maintenue par les butées 11, 12, 13 chacune recouverte d'une protection 14 de butée. Lorsque le dispositif de visualisation est monté, les protections 14 de butée sont respectivement coincées entre d'une part les angles de l'écran 1 et d'autre part les butées 11, 12 et 13. Les coulisseaux 15 et 16 ont respectivement des axes de bridage b de l'écran 1 qui sont respectivement orthogonaux aux axes de serrage s de ces coulisseaux 15 et 16 respectivement serrés par des vis de serrage 17 et 18. Les axes de bridage b et les axes de serrage s sont représentés en traits mixtes. Les vis de serrage 17 et 18 coopèrent respectivement avec des trous oblongs 19 et 20 pour serrer respectivement les coulisseaux 15 et 16. Toutes les côtes du dispositif de visualisation sont préférentiellement référencées par rapport à la butée 12, ce qui permet notamment d'optimiser l'alignement entre les touches de clavier et l'image affichée dans le cas où à l'écran 1 serait superposé un clavier tactile.

Le dispositif de visualisation selon l'invention est de préférence utilisée dans une console d'aéronef, et notamment dans une console d'aéronef militaire où le niveau de vibrations est spécialement élevé.

## Revendications

1. Dispositif de visualisation comportant au moins, une cellule d'affichage (1), un cadre (8) destiné à recevoir la cellule (1), un système (11, 12, 13, 15, 16) de maintien mécanique de la cellule (1) par rapport au cadre (8), **caractérisé en ce que** le système (11, 12, 13, 15, 16) de maintien mécanique comporte plusieurs butées (11, 12, 13) disposées de manière à déterminer sans la maintenir une position unique de la cellule (1) par rapport au cadre (8) dans un plan moyen (XY) de la cellule (1) et au moins un coulisseau (15, 16) disposé de manière à pouvoir, en coopérant avec les butées (11, 12, 13), maintenir ladite position.

2. Dispositif de visualisation selon la revendication 1, **caractérisé en ce que** la cellule d'affichage (1) est sensiblement plate et **en ce que** la direction (Z) de l'épaisseur de la cellule (1) est orthogonale au plan moyen (XY) de la cellule (1).

3. Dispositif de visualisation selon la revendication 2, **caractérisé en ce que** la cellule d'affichage (1) est un écran à cristaux liquides.

4. Dispositif de visualisation selon l'une quelconque des revendications précédentes, **caractérisé en ce que** les butées (11, 12, 13) sont au nombre de trois et **en ce que** les projections des butées (11, 12, 13) dans le plan moyen (XY) de la cellule (1) ne sont pas alignées.

5. Dispositif de visualisation selon l'une quelconque des revendications précédentes, **caractérisé en ce que** les butées (11, 12, 13) appartiennent toutes au cadre (8).

6. Dispositif de visualisation selon l'une quelconque des revendications précédentes, **caractérisé en ce qu'**à chaque butée (11, 12, 13) est associée une protection (14) de butée en matériau semi-rigide.

7. Dispositif de visualisation selon la revendication 6, **caractérisé en ce que** le matériau semi-rigide est du plastique.

8. Dispositif de visualisation selon l'une quelconque des revendications précédentes, **caractérisé en ce que** l'axe (s) de serrage de chaque coulisseau (15, 16) n'est pas parallèle à l'axe (b) de bridage de la cellule (1) par ledit coulisseau (15, 16).

9. Dispositif de visualisation selon la revendication 8, **caractérisé en ce que** l'axe (s) de serrage de chaque coulisseau (15, 16)est sensiblement orthogonal à l'axe (b) de bridage de la cellule (1) par ledit coulisseau (15, 16).

10. Dispositif de visualisation selon l'une quelconque des revendications précédentes, **caractérisé en ce que** le matériau du coulisseau (15, 16) est du plastique.

11. Dispositif de visualisation selon l'une quelconque des revendications précédentes, **caractérisé en ce que** la cellule (1) est de forme sensiblement rectangulaire dans son plan moyen (XY), **en ce que** les butées (11, 12, 13) sont au nombre de trois, **en ce que** deux (11, 12) des butées sont en contact avec un premier côté (101) du rectangle, les deux butées (11, 12) étant respectivement situées au voisinage de deux angles (105, 106) du rectangle, et **en ce que** la troisième butée (13) est en contact avec un deuxième côté (102) du rectangle non parallèle au premier côté (101), la troisième butée (13) étant située au voisinage d'un troisième angle (107) du rectangle.

12. Dispositif de visualisation selon la revendication 11, **caractérisé en ce que** le premier côté (101) est un grand côté du rectangle tandis que le deuxième côté (102) est un petit côté du rectangle.

13. Dispositif de visualisation selon l'une quelconque des revendications 11 à 12, **caractérisé en ce que** les coulisseaux (15, 16) sont au nombre d'au moins deux et **en ce que** deux (15, 16) des coulisseaux sont respectivement au contact des troisième (103) et quatrième (104) côtés du rectangle, les deux coulisseaux (15, 16) étant situés au voisinage du quatrième angle (108) du rectangle.

14. Dispositif de visualisation selon l'une quelconque des revendications 11 à 12, **caractérisé en ce que** les coulisseaux (15, 16) sont au nombre d'au moins un et **en ce qu'**un des coulisseaux est situé au voisinage du quatrième angle (108) du rectangle.

15. Console d'aéronef **caractérisée en ce qu'**elle comporte au moins un dispositif de visualisation selon l'une quelconque des revendications précédentes.

## Patentansprüche

1. Anzeigevorrichtung mit mindestens einer Anzeigezelle (1), mit einem Rahmen (8), der zur Aufnahme der Zelle (1) bestimmt ist, mit einem System (11, 12, 13, 15, 16) für den mechanischen Halt der Zelle (1) bezüglich des Rahmens (8), **dadurch gekennzeichnet, dass** das System (11, 12, 13, 15, 16) für den mechanischen Halt mehrere Anschläge (11, 12, 13), die so angeordnet sind, dass sie, ohne sie zu halten, eine einzige Stellung der Zelle (1) bezüglich des Rahmens (8) in einer Mittelebene (XY) der Zelle (1) bestimmen, und mindestens einen Schieber (15, 16) aufweist, der so angeordnet ist, dass er in Zusammenwirkung mit den Anschlägen (11, 12, 13) die Stellung halten kann.

2. Anzeigevorrichtung nach Anspruch 1, **dadurch gekennzeichnet, dass** die Anzeigezelle (1) im Wesentlichen flach ist, und dass die Richtung (Z) der Dicke der Zelle (1) zur Mittelebene (XY) der Zelle (1) orthogonal ist.

3. Anzeigevorrichtung nach Anspruch 2, **dadurch gekennzeichnet, dass** die Anzeigezelle (1) ein Flüssigkristallbildschirm ist.

4. Anzeigevorrichtung nach einem der vorhergehenden Ansprüche, **dadurch gekennzeichnet, dass** es drei Anschläge (11, 12, 13) gibt, und dass die Vorsprünge der Anschläge (11, 12, 13) in der Mittelebene (XY) der Zelle (1) nicht fluchtend ausgerichtet sind.

5. Anzeigevorrichtung nach einem der vorhergehenden Ansprüche, **dadurch gekennzeichnet, dass** die Anschläge (11, 12, 13) alle zum Rahmen (8) gehören.

6. Anzeigevorrichtung nach einem der vorhergehenden Ansprüche, **dadurch gekennzeichnet, dass** jedem Anschlag (11, 12, 13) ein Anschlagschutz (14) aus halbsteifem Material zugeordnet ist.

7. Anzeigevorrichtung nach Anspruch 6, **dadurch gekennzeichnet, dass** das halbsteife Material Kunststoff ist.

8. Anzeigevorrichtung nach einem der vorhergehenden Ansprüche, **dadurch gekennzeichnet, dass** die Spannachse (s) jedes Schiebers (15, 16) nicht parallel zur Achse (b) des Anflanschens der Zelle (1) durch den Schieber (15, 16) ist.

9. Anzeigevorrichtung nach Anspruch 8, **dadurch gekennzeichnet, dass** die Spannachse (s) jedes Schiebers (15, 16) im Wesentlichen orthogonal zur Achse (b) des Anflanschens der Zelle (1) durch den Schieber (15, 16) ist.

10. Anzeigevorrichtung nach einem der vorhergehenden Ansprüche, **dadurch gekennzeichnet, dass** das Material des Schiebers (15, 16) Kunststoff ist.

11. Anzeigevorrichtung nach einem der vorhergehenden Ansprüche, **dadurch gekennzeichnet, dass** die Zelle (1) in ihrer Mittelebene (XY) eine im Wesentlichen rechteckige Form hat, dass es drei Anschläge (11, 12, 13) gibt, dass zwei (11, 12) der Anschläge mit einer ersten Seite (101) des Rechtecks in Kontakt sind, wobei die beiden Anschläge (11, 12) sich je in der Nähe von zwei Ecken (105, 106) des Rechtecks befinden, und dass der dritte Anschlag (13) mit einer zweiten Seite (102) des Rechtecks in Kontakt ist, die nicht parallel zur ersten Seite (101) ist, wobei der dritte Anschlag (13) sich in der Nähe einer dritten Ecke (107) des Rechtecks befindet.

12. Anzeigevorrichtung nach Anspruch 11, **dadurch gekennzeichnet, dass** die erste Seite (101) eine große Seite des Rechtecks ist, während die zweite Seite (102) eine kleine Seite des Rechtecks ist.

13. Anzeigevorrichtung nach einem der Ansprüche 11 bis 12, **dadurch gekennzeichnet, dass** es mindestens zwei Schieber (15, 16) gibt, und dass zwei der Schieber (15, 16) mit der dritten (103) bzw. vierten Seite (104) des Rechtecks in Kontakt sind, wobei die beiden Schieber (15, 16) sich in der Nähe der vierten Ecke (108) des Rechtecks befinden.

14. Anzeigevorrichtung nach einem der Ansprüche 11 bis 12, **dadurch gekennzeichnet, dass** es mindestens einen Schieber (15, 16) gibt, und dass einer der Schieber sich in der Nähe der vierten Ecke (108) des Rechtecks befindet.

15. Luftfahrzeug-Steuerpult, **dadurch gekennzeichnet, dass** es mindestens eine Anzeigevorrichtung nach einem der vorhergehenden Ansprüche aufweist.

## Claims

1. Display device comprising, as a minimum, a display cell (1), a frame (8) designed to receive the cell (1), and a system (11, 12, 13, 15, 16) for mechanically holding the cell (1) with respect to the frame (8), the device being **characterized in that** the mechanical holding system (11, 12, 13, 15, 16) comprises several stops (11, 12, 13) arranged in such a way as to define without maintaining a unique position of the cell (1) with respect to the frame (8) in a mean plane (XY) of the cell (1) and at least one block (15, 16) arranged in such a way as to be able, in combination with the stops (11, 12, 13), to maintain said position.

2. Display device according to Claim 1, **characterized in that** the display cell (1) is essentially flat and **in that** the direction (Z) of the thickness of the cell (1) is orthogonal to the mean plane (XY) of the cell (1).

3. Display device according to Claim 2, **characterized in that** the display cell (1) is a liquid crystal screen.

4. Display device according to any one of the preceding claims, **characterized in that** there are three stops (11, 12, 13) and **in that** the projections of the stops (11, 12, 13) in the mean plane (XY) of the cell (1) are not aligned.

5. Display device according to any one of the preceding claims, **characterized in that** the stops (11, 12, 13) all belong to the frame (8).

6. Display device according to any one of the preceding claims, **characterized in that** each stop (11, 12, 13) is provided with a stop protector (14) made of semi-rigid material.

7. Display device according to Claim 6, **characterized in that** the semi-rigid material is plastic.

8. Display device according to any one of the preceding claims, **characterized in that** the tightening axis (s) of each block (15, 16) is not parallel to the axis (b) of constraint of the cell (1) by said block (15, 16).

9. Display device according to Claim 8, **characterized in that** the tightening axis (s) of each block (15, 16) is more or less orthogonal to the axis (b) of constraint of the cell (1) by said block (15, 16).

10. Display device according to any one of the preceding claims, **characterized in that** the material of the block (15, 16) is plastic.

11. Display device according to any one of the preceding claims, **characterized in that** the cell (1) is of essentially rectangular shape in its mean plane (XY), **in that** there are three stops (11, 12, 13), **in that** two (11, 12) of the stops are in contact with a first side (101) of the rectangle, the two stops (11, 12) being situated in the vicinity of two corners (105, 106) of the rectangle, and **in that** the third stop (13) is in contact with a second side (102) of the rectangle that is not parallel to the first side (101), the third stop (13) being situated in the vicinity of a third corner (107) of the rectangle.

12. Display device according to Claim 11, **characterized in that** the first side (101) is a long side of the rectangle while the second side (102) is a short side of the rectangle.

13. Display device according to either of Claims 11 and 12, **characterized in that** there are at least two of the blocks (15, 16) and **in that** two (15, 16) of the blocks are in contact with the third (103) and fourth (104) sides, respectively, of the rectangle, the two blocks (15, 16) being situated in the vicinity of the fourth corner (108) of the rectangle.

14. Display device according to either of Claims 11 and 12, **characterized in that** there is at least one of the blocks (15, 16) and **in that** one of the blocks is situated in the vicinity of the fourth corner (108) of the rectangle.

15. Aircraft instrument panel **characterized in that** it comprises at least one display device according to any one of the preceding claims.
